# EUROPEAN PATENT SPECIFICATION

(11) **EP 3 076 566 B1**
(45) Date of publication and mention of the grant of the patent: **02.01.2019**
(21) Application number: 15305466.3
(22) Date of filing: 31.03.2015
(51) Int. Cl.: H04B 10/112, H04B 10/2587

(54) **INFORMATION TRANSMISSION BY ELECTROMAGNETIC SIGNAL MODULATION**
INFORMATIONSÜBERTRAGUNG ÜBER ELEKTROMAGNETISCHE SIGNALMODULATION
TRANSMISSION D'INFORMATIONS PAR MODULATION D'UN SIGNAL ÉLECTROMAGNÉTIQUE

(43) Date of publication of application: 05.10.2016
(73) Proprietor: Alcatel Lucent, 91620 Nozay (FR)
(72) Inventor: Kucera, Stepan, Blanchardstown Dublin 15 (IE); Bulja, Senad, Blanchardstown Dublin 15 (IE)
(74) Representative: Nokia EPO representatives

(56) References cited:
- WO-A2-02/05459
- WO-A2-2014/085574
- US-A1- 2006 269 294
- US-A1- 2015 078 748

## Description

### FIELD OF THE INVENTION

The field of the invention relates to the field of wireless transmission of information and in particular to the use of modulation of an electromagnetic signal to transmit the information.

### BACKGROUND

In a cellular wireless telecommunications network, radio coverage for supporting user equipment communication is provided by network nodes in areas known as cells. A base station or network node is located in each cell to provide the radio coverage area or cell. Traditional base stations provide coverage in relatively large geographical areas and these are often referred to as macro cells. It is possible to provide smaller sized cells, and these are often located within a larger macro cell providing an increase in capacity in certain areas. Such smaller sized cells are sometimes referred to as micro cells, pico cells or femto cells. Such small cells are typically established by providing a small cell base station that provides radio coverage having a relatively limited range, typically within the radio coverage area of a macro cell. The transmission power of the small cell base station is relatively low and, hence, each small cell provides a smaller coverage area compared to that of a macro cell and covers, for example, an office or a home. A group of such small cell base stations may together provide a wireless small cell network.

Such small cells have generally been provided where the communication coverage provided by the macro cell is poor, or where a user wishes to use an alternative communications link provided locally by the small cell base station, to communicate with the core network. Such a situation might arise where, for example, a user has a pre-existing communications link and the user wishes to utilise that link in preference to that provided by the macro cell network provider to communicate with the core network. However, increasingly, small cells are being deployed in areas of high traffic demand (often referred to as hot spots), where that demand risks overloading the macro cell. Users can then be handed over to the small cell in order to reduce the traffic load on the macro cell.

One major challenge for operator deployment of small cells is the cost of the operation and deployment of such cells. The main issue here is the deployment of a backhaul link to communicate with other network nodes and the provision of power to the nodes, these requirements place considerable restrictions on potential deployment sites and increase costs.

One way of addressing this may be to use a powered node to transmit an electromagnetic signal to the remote network node and allow information to be transmitted back to the powered node by the simple modulation of the signal. This provides a low power way of transmitting information. One potential problem with this solution is that the speed that a signal can be modulated at will limit the amount of information that can be sent.

It would be desirable to be able to increase the information sent on a modulated electromagnetic signal.

WO02/05459 discloses a system that uses an optical fibre to distribute a signal from a central to multiple local distribution nodes which each employ a point to multipoint signalling system to transmit data optically from the local distribution node to multiple user stations and to receive data from a plurality of user stations. The local distribution nodes transmit data by reflecting and modulating a wireless optical signal received from each of the multiple user stations, the modulation is performed at a plurality of modulators corresponding to the multiple user stations.

US 2006/0269294 discloses optical transmission equipment that transmits a signal via an optical fibre. It notes that the problem of limited bandwidth within an optical fibre has been addressed by providing an improved signal modulation format that includes multiple modulators for simultaneously modulating the amplitude and the phase of the signal. It recognises that although multiple modulators may be provided along an optical fibre the signal modulated by the first modulator will pass through subsequent modulators thereby having a longer signal path post modulation. This means that where a serial input signal has been divided into several parallel signals and input to the various modulators it is difficult to reconstruct the signal. This is addressed by providing delay buffers in the signal path to the modulators such that the later difference in path lengths is compensated for.

### SUMMARY

A first aspect of the present invention provides a device for wirelessly transmitting information by modulating a wirelessly transmitted electromagnetic signal, said device comprising: at least one retro-reflector operable to reflect said electromagnetic signal back towards a source of said electromagnetic signal; and a modulator arranged in a path of said electromagnetic signal and operable to modulate said electromagnetic signal; said modulator comprising at least two electromagnetic modulators each operable to modulate a property of said electromagnetic signal in dependence upon a signal applied to said electromagnetic modulator, each of said electromagnetic modulators being operable to generate a different predetermined type of modulation such that modulation due to each electromagnetic modulator can be identified in said modulated signal; wherein said modulator comprises an input for receiving a signal comprising said information, a serial to parallel signal convertor for converting said signal into at least two parallel signals, said at least two parallel signals being applied to different ones of said at least two electromagnetic modulators.

The transmission of information by modulating an electromagnetic signal is a low power way of transmitting information as the signal is modulated rather than generated and as such can simply be reflected back from the device transmitting it. Thus, information can be transmitted from a device with little power consumption. Furthermore, the use of a retro reflector allows an electromagnetic signal to be transmitted back towards the source of the signal without the need to provide complicated beam steering techniques, which again is a power saving. One problem with this technique is that the modulation of the electromagnetic signal requires modulation devices which modulate a property of the electromagnetic signal and this modulation is limited by the physical properties of the electromagnetic modulator and as such, the amount of information that can be transmitted using this modulated signal may itself be limited. Thus, although the technique is effective in transmitting information in a low power manner, it does have bandwidth limitations. These have been addressed in the first aspect of the present invention by using more than one electromagnetic modulator, the different electromagnetic modulators generating different predetermined types of modulation each mutually unique such that modulation due to each modulator can be identified in the modulated signal. In this the signal containing the information to be transmitted may be converted into plural signals each driving a different modulator. In this way the signal to be transmitted is converted into separate signals and the information is transmitted along what can be viewed as different channels by each signal driving each of the electromagnetic modulators in parallel. As the electromagnetic modulators modulate the signals in a different predetermined way, the modulated signals can be separated on receipt and the different parallel signals can be identified and combined to generate the original signal. In this way, the bandwidth that can be transmitted using electromagnetic modulation is increased.

In some embodiments, said electromagnetic modulators comprise light modulating material mounted on at least a portion of a surface of said at least one retro-reflector and the property is an optical property.

Although the electromagnetic modulators can take a number of forms, in some cases they comprise a light modulating material that is mounted on at least a portion of a surface of the retro reflector and modulates an optical property of the electromagnetic signal. In this regard, the electromagnetic modulators may be mounted at different points on the retro reflector provided that the electromagnetic signal reflected by it passes through each of them. Alternatively where the signal travels through them they may be mounted in the same place in a sort of stack such that the signal travels through one modulating means and then through the next. In this regard, provided the electromagnetic signal travels through both of the electromagnetic modulators, their location on or adjacent to the retro-reflector is unimportant.

In some embodiments, said light modulating material comprises liquid crystals and said property comprises an optical path length such that a phase of said electromagnetic signal is modulated by said applied electrical signal.

The light modulating material may comprise liquid crystals. An electrical signal applied to the liquid crystals will change the orientation of molecules within the liquid crystals and will change an optical path length that an electromagnetic signal travelling through them experiences. In this way, the phase of the electromagnetic signal is modulated.

In some embodiments, an orientation of said liquid crystals is different in said at least two electromagnetic modulators such that each electromagnetic modulator induces a distinct phase shift pattern.

One way of generating different and distinct modulations is to change the orientation of the liquid crystals such that a distinct phase shift pattern is generated in the signal passing through the crystals. In effect, distinct polarisation variations in response to the signal applied to the electromagnetic modulators are produced and these distinct polarisations are visible in the modulated signal and can be used to identify the modulator that generated them and thus the signal that caused the modulation.

In some embodiments, at least one of said retro-reflectors comprises at least two electromagnetic modulators.

Although there may be a single electromagnetic modulator mounted on each retro reflector, in some embodiments, the retro reflector may comprise several electromagnetic modulators. In this regard, they may be mounted on different surfaces of the retro reflector where, for example, the retro reflector is a corner cube or it may be mounted at a same position.

In some embodiments, at least two of said at least two electromagnetic modulators are driven by a same electrical signal.

In some cases, two or more of the electromagnetic modulators may be driven by a same electrical signal. In this regard, each electromagnetic modulator generates a distinct modulation. In some cases, a combination of two electromagnetic modulators will generate its own distinct pattern and in this way, by combining electromagnetic modulators, more distinct patterns can be generated and the signal can be divided into more parts with more in effect channels being generated such that the amount of data that can be transmitted is increased.

In some embodiments, at least two of said at least two electromagnetic modulators are driven by a different electrical signal.

The electromagnetic modulators may be driven by different electrical signals and in this case each modulator provides its own signal channel.

In some embodiments, said device comprises a predetermined number of electromagnetic modulators each operable to generate a different predetermined type of modulation, and further electromagnetic modulators said further electromagnetic modulators each operable to generate a same predetermined type of modulation as one of said predetermined number of electromagnetic modulators, wherein at least two of said electromagnetic modulators are mounted such that said electromagnetic signal passes through both of said at least two electromagnetic modulators, and a same electrical signal is applied to said at least two electromagnetic modulators, modulation of said electromagnetic signal modulated by said at least two electromagnetic modulators being a combination of modulation caused by each of said at least two electromagnetic modulators, wherein said different predetermined types of modulation and said combinations are such that modulation due to each of said electrical signals can be identified in said modulated signal.

As mentioned previously, the number of electromagnetic modulators each able to generate a different predetermined type of modulation, may be limited depending on the type of modulator. However, it may be possible to generate further distinct types of modulation by combining some of the electromagnetic modulators. In such a case, two or more electromagnetic modulators may be driven by a same electrical signal and the modulated signal from these combined modulators will be distinct and more data can be transmitted.

In some embodiments, the number of retro reflectors is greater than the predetermined number of different electromagnetic modulators. In this regard, there may be a number or retro reflectors at least some of which have a plurality of electromagnetic modulators mounted on them such that there are more channels of signals transmitted than there are distinct modulation patterns generated by single electromagnetic modulators.

Although the electromagnetic signal may be a number of things, in some embodiments it is a laser beam. Lasers are a mature technology where a coherent electromagnetic signal can be generated in a relatively cheap and very effective manner.

In some embodiments, said serial to parallel converter comprises a sampler for sampling said signal an output of said sampler during different subsets of time comprising said at least two parallel signals.

One way of splitting the signal and at the same time generating a digital output to drive the electromagnetic modulators is to use a sampler. The sampler samples the signal and outputs the different samples of the signals to different electromagnetic modulators in parallel.

A second aspect of the present invention provides a network node or supporting communication with user equipment of a wireless telecommunication network, said network node comprising: an antenna for receiving and transmitting wireless telecommunication communication signals to a user equipment, said wireless telecommunication signals being within a first frequency band; and receiver for receiving an electromagnetic signal and a device according to a first aspect for modulating said electromagnetic signal in response to a signal received from said user equipment, said electromagnetic signal being in a second frequency band different to said first frequency band.

This technique may be particularly applicable to a network node and in particular a remote network node which may not have a wired backhaul link and which may only have a very limited power supply.

In some embodiments, said second frequency band is a higher frequency band than said first frequency band. In some embodiments said first frequency band is a radio frequency band and said second frequency band is an optical frequency band.

In some embodiments, said electromagnetic signal is a laser beam.

In some embodiments, said receiver is further operable to receive downlink data for said user equipment within an electromagnetic signal in said second frequency band, said network node further comprising: a frequency converter for converting said received electromagnetic signal from said second to said first frequency band; and a transmitter for transmitting said converted electromagnetic signal towards said user equipment.

In addition to transmitting uplink data to the network controller node, the network node may receive downlink data from this node. This again may transmitted as an electromagnetic signal within the second frequency band and this may be converted by the network node to the first frequency band prior to transmitting to the user equipment. Where the second frequency band is at a higher frequency than the first frequency band, then this is a simple conversion to do and requires little or no power.

In some embodiments, the received electromagnetic signal that contains the downlink data is the same signal that is reflected and modulated to contain the uplink signal. In this regard, where different forms of modulation are used to transmit this information, for example, the downlink data may use amplitude modulation where the uplink signal may use phase modulation, then it is a simple matter to use the same carrier signal as no interference between the different modulations will occur. Where however the same modulation is used to transmit the information, then the same carrier signal can still be used as the network controller node is aware of the information within the downlink data and can thus distinguish any uplink data in the modulated electromagnetic signal it receives from the downlink data that it sent.

In other embodiments separate electromagnetic signals may be transmitted, one being reflected and modulated to contain the uplink data and the other containing the downlink data.

In some embodiments, said network node comprises an optical electrical converter operable to convert at least a portion of said received electromagnetic signal into an electrical power for powering said network node.

As the network node has been designed not to perform processing of the user equipment signal or to actively transmit a signal to a further network node, the network controller node, it can operate at a very low power, in some embodiments, rather than needing a separate power source it can be powered using power harvested from an electromagnetic signal received from the network controller node. In this regard, where the network controller node transmits electromagnetic signals to it in a higher frequency band, then there is significant energy within these signals and harvesting some of this energy to power the network node is an efficient way of powering this node without the requirement for a separate power supply.

A third aspect of the present invention provides a method for wirelessly transmitting information by modulating a wirelessly transmitted electromagnetic signal comprising: reflecting said electromagnetic signal back towards a source of said electromagnetic signal using a retro-reflector; receiving a signal comprising said information; converting said signal into at least two parallel electrical signals; applying said at least two parallel electrical signals to different ones of at least two electromagnetic modulators; modulating at least one property of said electromagnetic signal with said at least two electromagnetic modulators, each of said electromagnetic modulators being operable to generate a different predetermined type of modulation such that modulation due to each electromagnetic modulator can be identified in said modulated signal.

A fourth aspect of the present invention provides a device for receiving and demodulating a signal, comprising: a transmitter for transmitting an electromagnetic signal wirelessly towards a signalling device; a receiver for receiving an electromagnetic signal, said electromagnetic signal comprising said electromagnetic signal transmitted by said transmitter and modulated by and reflected from said signalling device; a demodulator for demodulating said received electromagnetic signal, said demodulator being operable to access modulation data for said electromagnetic signal indicating a plurality of phase shift patterns applied by a plurality of modulators on said signalling device and a sequence in which said signal was split and fed to said plurality of modulators, said demodulator identifying portions of said electromagnetic signal modulated by each of said plurality of modulators and demodulating and combining said signals in said sequence to form a demodulated signal.

A fifth aspect of the present invention provides a network controller node for supporting communication with user equipment of a wireless telecommunication network, said network controller node comprising: a device according to a fourth aspect operable to transmit electromagnetic signals wirelessly towards a network node of said wireless telecommunication network, at least one of aid electromagnetic signals comprising downlink data for user equipment communicating with said network node; wherein said demodulator is operable to demodulate said received electromagnetic signal to extract uplink data from user equipment communicating with said network node; and said device is operable to transmit said electromagnetic signals in a second frequency band towards said network node, said user equipment communicating with said network nodes in a first frequency band, said second frequency band being a different frequency band to said first frequency band.

In some embodiments, said network controller node supports wireless communication for user equipment within a cell comprising said network node, said network node supporting wireless communication within a small cell located within said cell of said network controller node, said network controller node comprising an antenna for transmitting and receiving signals from user equipment in said first frequency band.

Although the network controller node may simply be a small cell controller operable to control one or more network nodes of small cells, in some embodiments it may be a network node itself of a larger cell within which the small cell may be situated. In some embodiments, said network controller node comprises processing logic for processing said uplink signals.

In order for the remote network node not to have high power or hardware requirements, the processing of the signals that it receives from user equipment may be performed at the network controller node. Locating the hardware and power requirements of such tasks centrally in a network controller node is efficient and in some embodiments the network controller node may communicate with and perform processing for a plurality of network nodes. In this regard, the processing will include demodulating the uplink signal and also generating and transmitting appropriate signals on the downlink channel. The network controller node may also control the idle mode processing for the network node which not only reduces the power consumption of that node but also in some cases where the network controller node receives signals from several network nodes allows the control to be improved taking into account the operation of several cells.

In some embodiments said network controller node comprises at least one transmitter operable to transmit electromagnetic signals wirelessly towards a plurality of network nodes; a receiver for receiving a plurality of electromagnetic signals, said electromagnetic signals comprising electromagnetic signals transmitted by said at least one transmitter and modulated by and reflected from said plurality of network nodes.

The network controller node may communicate with a plurality of network nodes and in such a case processing circuitry on the network controller node can provide processing for each of them.

A method is also disclosed for receiving and demodulating a signal, the method comprising: transmitting an electromagnetic signal wirelessly towards a signalling device; receiving an electromagnetic signal, said electromagnetic signal comprising said electromagnetic signal transmitted in said transmitting step and modulated by and reflected from said signalling device; demodulating said received electromagnetic signal by accessing modulation data for said electromagnetic signal indicating a plurality of phase shift patterns applied by a plurality of modulators on said signalling device and a sequence in which said signal was split and fed to said plurality of modulators, and identifying portions of said electromagnetic signal modulated by each of said plurality of modulators and demodulating and combining said signals in said sequence to form a demodulated signal.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 schematically illustrates a device for modulating an electromagnetic signal according to an embodiment;
Figure 2 schematically shows the uplink signal of a mobile user to the small cell is serial-to-parallel converted into four substreams and relayed to a small-cell controller by inducing four unique polarization patterns into retro-reflected light of the controller;
Figure 3A schematically shows a corner cube with indicated reflective properties;
Figure 3B schematically shows four possible orientations of LC coating on the corner cube walls that are characterized by distinct polarization shifts;
Figure 4 shows a schematic illustration of the uplink channel;
Figure 5 schematically shows an uplink channel using multiple phase-modulating retro-reflectors characterized by mutually unique modulation patterns;
Figure 6 schematically shows phase difference between States 1 and 2 achieved by two types of LC material (CB5 and 5PCH) assuming the LC coating of 1 or 2 walls of the corner cube; and
Figure 7 schematically shows an example of ten different spatial LC orientations in a corner-cube coating that are characterized by distinct polarization shifts.

### DESCRIPTION OF THE EMBODIMENTS

Before discussing the embodiments in any more detail, first an overview will be provided.

In the field of wireless communications, an increasing number of small cells are being deployed. The cost of their deployment is increased by the need for a wired backhaul link and power supply. If these requirements were not present then nodes for these small cells could be deployed at a far lower cost. One low power way of transmitting information to another control node is the use of modulation to modulate an electromagnetic signal that is received from that node. The received signal can be modulated with the information to be transmitted and reflected back to the node using a retro-reflector. In this way information can be transmitted in a low power manner. In some embodiments the reflected beam has been generated by a laser which provides a directional beam that will not interfere with the radio frequency communications. One potential problem is the speed with which the electromagnetic signal can be modulated. In this regard modulating means which modulate a property of the electromagnetic signal may only operate up to a certain speed. One example of a modulating means are liquid crystals mounted on the retro-reflector and controlled by an electrical signal which when applied to the liquid crystals change the direction of orientation of the crystals and this affects the optical path that the electromagnetic signal follows travelling through them. This change can be detected as a phase shift in the electromagnetic signal. The rate at which the directions of the crystals change limits the amount of information that can be transmitted in this manner.

This has been addressed in embodiments by providing two or more modulators, the laser beam passing through each of them and each modulator modulating the signal in a mutually unique manner. If the information that is to be sent is split into two or more separate signals each containing a fraction of the information in the original signal, then the different portions of the split signal can be routed to drive the modulators in parallel, and as each signal contains less information the speed of the modulators is sufficient. The original signal can be reformed at the receiver as the modulations of each modulator are unique and can thus, be identified and separated.

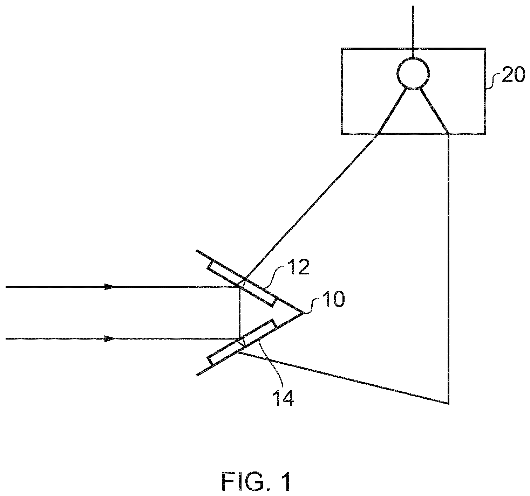

Figure 1 shows a retro-reflector 10 according to an embodiment. The retro-reflector has modulators 12, 14 mounted on each reflective surface such that the signal passes through both modulators as it is reflected. The modulators are designed such that they modulate in mutually unique ways so that the resultant modulations can be identified as coming from one or other of the modulators.

The signal with information to be transmitted is received and is sampled and converted to a digital control signal for driving the modulators at sampler/ converter 20. The signal is split into two signals within the converter 20 and each split signal is used to drive the two modulators in parallel. In this way a sampling frequency that is higher than the reaction time of the modulators may be used as each modulator need only operate at half of the sampling frequency.

The modulated signal that is received back at the laser beam source can be demodulated and the original signal decoded by separating out the signals from each modulator and recombining them.

Such modulators may be particularly useful in wireless networks. In these networks operators can address the increasingly high data demand by allocating more carriers, but technically usable wireless spectrum is limited and expensive. Therefore, cellular operators have a high interest in utilizing the spectrum as efficiently as possible. In this regard, deploying small cells is the easiest way to improve the spectrum utilization by spatial re-use (so-called co-channel deployments). The network capacity can be increased linearly with the number of deployed small cells within the same spectrum.

As a result, femtocells have become widely deployed in the past years to improve cellular indoor capacity (and coverage). In addition operators are currently interested in outdoor small cell deployments, such as ALU's lightRadio small cells.

One major challenge for operator deployed small cells is the operation and deployment cost of such cells. Here the main issue is the provision of both power and backhaul, which make today's small cell deployment expensive.

Considering the requirements of power and backhaul, placement options are currently very restricted. In addition, current solutions are very expensive as site rental on its own typically represents around 60% of costs associated with small cell deployment and operation.

Therefore, any solution that can widen the potential of small cell deployment by removing or reducing those restricted requirements and associated costs would be most welcome.

Embodiments seek to provide a novel small cell architecture which in some cases allows an energy autonomous deployment of small cells with wireless power and wireless backhaul and a small cost/ size. This can significantly reduce the deployment costs and enable cost effective large scale small cell deployments.

Conventionally high-capacity backhaul is implemented by means of fibre optics which is very expensive to lay or rent.

In the field of wireless communication the topology-independent fundamental problem can be viewed as how to establish multiple high-capacity wireless communication channels between two endpoints A and B, each of them being, for example a small cell, the hosting macro cell, or a cloud-RAN access point.

To this end, embodiments propose to
- provide at least N retro-reflectors at entity B, and coat them by liquid crystal (LC) layers having N mutually distinct and pre-determined spatial orientations of the LC molecules in the absence of any control voltage,
- emit laser light from entity A to entity B, and reflect it back from B to A by using the N LC-coated retro-reflectors,
- modulate the reflected light at each of the N retro-reflectors by driving its LC layer with an input signal obtained from one of N communication channels,
- detect the N signals from N communication channels at entity A by distinguishing the "3D" phase (i.e., polarization) shift of the retro-reflected light that was caused by the variations of the optical path length in the modulated LC layers,
whereby
- the patterns of LC molecule spatial orientations are chosen in a way so that any of the polarization patterns cannot be confused by the detector of entity A with an arbitrary combination of the remaining N-1 patterns, i.e. the patterns are orthogonal or mutually unique.

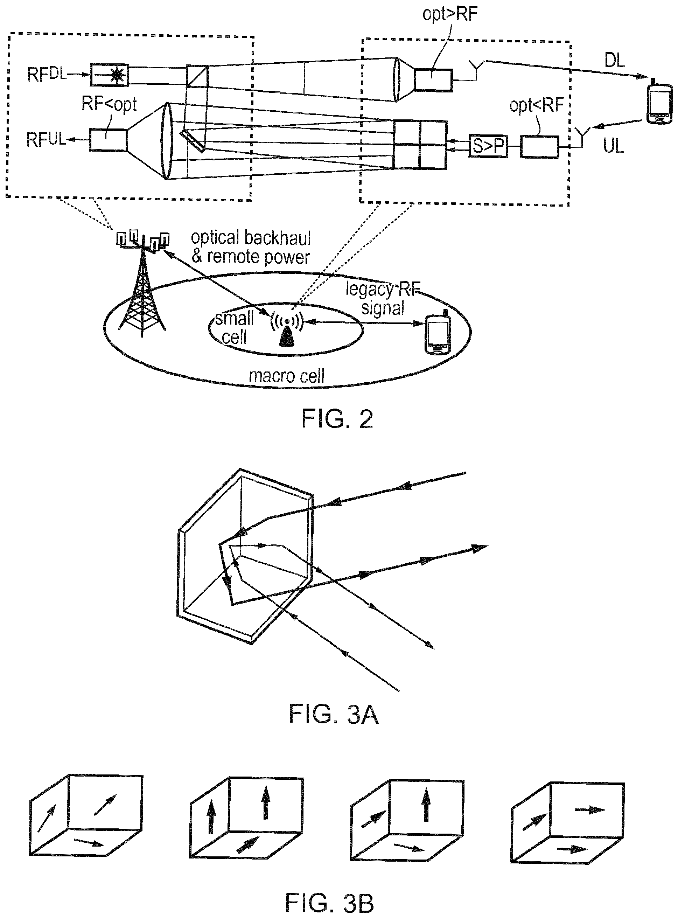

In the example of Fig. 2, a small-cell controller emits a laser beam to the small cell to deliver a downlink (forehaul) signal to the small cell. At the same time, an unmodulated "uplink" laser beam is pointed at four LC-coated retro-reflectors of the small cell.

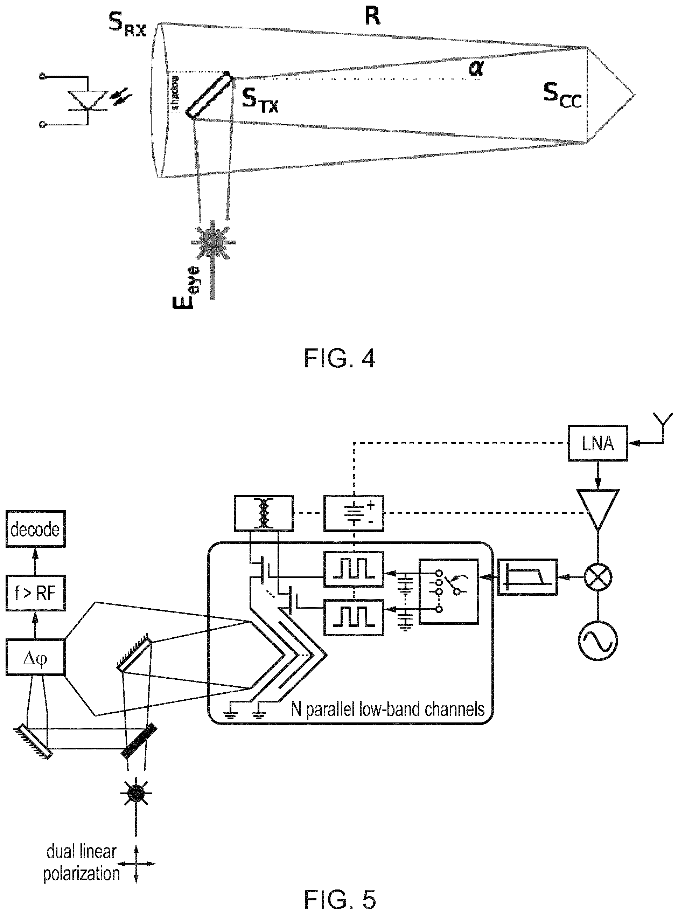

As illustrated by Fig. 3, each of these retro-reflectors (i) reflects the incident light back along the same optical axis, and (ii) induces a distinct polarization variation in response to the modulation of its LCs by an input signal. Fig. 4 shows an example of a retro-reflector in the form of a corner cube as well as four possible LC orientations characterized by unique polarization shifts of the retro-reflected light. The four required input signals are obtained by serial-to-parallel conversion of the uplink signal from a mobile user into four substreams.

This embodiment considers the fundamental scenario consisting of a small-cell controller (SCC) and an optical-to-RF converter (ORC) that communicate by using two separate optical channels.

Line-of-sight communications are assumed which is a standard required also for RF approaches based on 38-60 GHz mm-wave carriers.

### Downlink channel

On the SCC side, a simple eye-safe laser of class 1M emits an optical signal having a carrier wavelength of 1550 nm (near-infrared frequency), maximum intensity of 100mW/cm2 at aperture and typical spatial divergence of 0.5 to 1 mrad. Higher eye-safe outputs are possible as specified by. The optical carrier frequency is modulated in an analog manner with a legacy RF waveform such as 3G UMTS CDMA or 4G LTE OFDM. Beams can be expanded to desired aperture intensities (i.e., output power) by standard laser beam expanders.

On the ORC side, a receiving lens focuses the incident light onto a detecting device. This device can be for example
- a zero-bias high-speed edge-coupled unitraveling-carrier InGaAs photodiode ,
- high-power flip-chip mounted photodiode array ,
- proprietary silicon-photonics device as developed by Bell Labs and their collaborators (Tyndall Institute Ireland).

The speed of these devices is typically at the order of units to tens of GHz, so the detected signal can be directly sent to the antenna for RF broadcast to the surrounding mobile network users. Frequency up/down-conversions and amplification are typically not required, although they can be readily incorporated into the system design.

### Uplink channel (see Fig. 4)

On the uplink, the ORC retro-reflects a light beam emitted by the SCC by using a set of retro-reflectors, consisting for example from a corner cube as depicted in Fig. 3A. In this way, the need of perfectly and continuously (re)-aligning the uplink optical transmission with the optical axis of the downlink communication channel is eliminated.

The retro-reflected SCC light beam is modulated by input (relayed) signals. The actual RF-to-optical modulation is carried by using liquid crystal (LC) coating of the corner-cube walls that are capable of nano-second fast switching of their relative permitivity.

By varying the permitivity of the LC coating, a phase shift of the electrical component of the retro-reflected light is induced, a phenomena that is observable at the SCC by using standard interferometry, i.e. by comparing the phase of the light at the SCC source (original signal with no phase modulation) and at the SCC receiver (retro-reflected phase-modulated light).

By using different spatial orientation of the LC coating on different corner cubes of the ORC, orthogonal (non-interfering) channels can be implemented as described in the next.

### MULTI-CHANNEL RF-TO-OPTICAL MODULATION (Fig.5)

The relaying of the uplink signal of an LTE user is described next. The same procedure can be used for relaying optical signals from neighboring small cells or small-cell controllers, hence the corresponding description is omitted.

The analog uplink signal from the mobile users (e.g., the 4G LTE OFDM signal) is first amplified and down-converted to baseband.

The baseband signal is then converted to a data stream consisting for example of
(a) the binary sequence of the LTE payload data (to this end, standard processing and decoding of the LTE signal is required),
(b) sequence of complex in-phase and quadrature samples of the baseband signal (conversion phase is required, optionally followed by CPRI format representation),
(c) sequence of analog samples (only sampling and hold operations are required).

The data stream is them serial-to-parallel converted into N parallel substreams.

The binary data from cases (a) and (b) can be then directly used to drive the LC layers of N corner cubes of the ORC as described in more detail subsequently. The analog samples in case (c) can be converted to binary data for LC control by feeding them as input to a voltage-controlled pulse train generator whose frequency/pulse width varies as function of the input voltage (see Fig. 5).

In each of the N channels, if no pulse is present (binary 0 in the corresponding data substream), the molecules of LCs are in a "normal" or ground state - State 1. If a pulse creates a voltage gradient across the LC layer (binary 1), the orientation of LC molecules changes and, excited state - State 2 is assumed.

The transition from State 1 to/from State 2 is characterized by a change of the optical length of the path along which the incident light travels in the LC layer. This results in a phase shift of the State-2 optical signal as compared to the original State-1 signal. By using standard interferometry and taking advantage of the fact that the SCC is the source of the retro-reflected light, the LC-induced phase shift can be detected at the SCC.

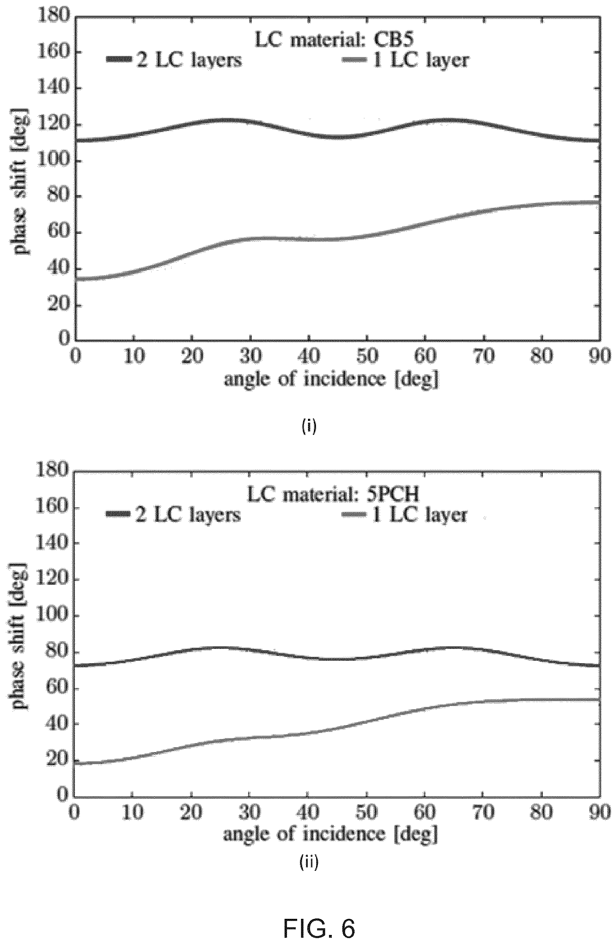

Fig. 6 shows the phase difference between States 1 and 2 achieved by two types of LC material (CB5 and 5PCH) assuming the LC coating of 1 or 2 walls of the corner cube. A large phase shift of tens of degrees is observed, independently of the angle or incidence. In order to be able to differentiate the N parallel channels at the SCC decoder, the ORC must modulate the retro-reflected light by using N different phase-shift patterns. This is achieved by using different spatial orientation of the LC molecules on the three walls of the corner cubes that are associated the individual parallel channels.

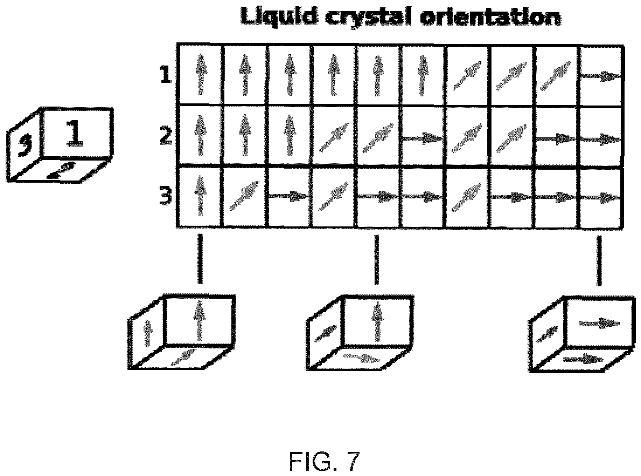

Fig. 7 shows the example of how ten channels can be implemented by using ten distinct patterns of LC orientation.

The LCs induce a phase shift only to the component of the electrical field of the incident light that is aligned with the orientation of the LC layer through which the light passes. Effectively, the triple reflection by the corner cube induces a polarization shift to the retro-reflected light that is unique to each channel - a property that can be detected at the SCC.

In summary a scalable and cost-efficient solution to backhaul/forehaul provisioning using simple and mature optical technology is provided, with a high-capacity achieved by polarization multiplexing.

Furthermore due to the retro-reflector no optical alignment on the uplink is required.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A device for wirelessly transmitting information by modulating a wirelessly transmitted electromagnetic signal, said device comprising:
at least one retro-reflector (10) operable to reflect said electromagnetic signal back towards a source of said electromagnetic signal; and
a modulator (20, 10) arranged in a path of said electromagnetic signal and operable to modulate said electromagnetic signal;
said modulator comprising at least two electromagnetic modulators (12, 14) each operable to modulate a property of said electromagnetic signal in dependence upon a signal applied to said electromagnetic modulator, each of said electromagnetic modulators being operable to generate a different predetermined type of modulation such that modulation due to each electromagnetic modulator can be identified in said modulated signal; wherein
said modulator comprises an input for receiving a signal comprising said information, a serial to parallel signal convertor (20) for converting said signal into at least two parallel signals, said at least two parallel signals being applied to different ones of said at least two electromagnetic modulators (12, 14).

2. A device according to claim 1, wherein said electromagnetic modulators (12, 14) comprise light modulating material mounted on at least a portion of a surface of said at least one retro-reflector.

3. A device according to claim 2, wherein said light modulating material comprises liquid crystals and said property comprises an optical path length such that a phase of said electromagnetic signal is modulated by said applied electrical signal.

4. A device according to claim 3, wherein an orientation of said liquid crystals is different in said at least two electromagnetic modulators such that each electromagnetic modulator induces a distinct phase shift pattern.

5. A device according to any preceding claim, wherein at least one of said retro-reflectors (10) comprises at least two electromagnetic modulators (12, 14).

6. A device according to claim 5, wherein at least two of said at least two electromagnetic modulators are driven by a same electrical signal.

7. A device according to claim 5 or 6, wherein at least two of said at least two electromagnetic modulators (12, 14) are driven by a different electrical signal.

8. A device according to any preceding claim, comprising:
a predetermined number of electromagnetic modulators each operable to generate a different predetermined type of modulation, and further electromagnetic modulators said further electromagnetic modulators each operable to generate a same predetermined type of modulation as one of said predetermined number of electromagnetic modulators, wherein
at least two of said electromagnetic modulators are mounted such that said electromagnetic signal passes through both of said at least two electromagnetic modulators, and a same electrical signal is applied to said at least two electromagnetic modulators, modulation of said electromagnetic signal modulated by said at least two electromagnetic modulators being a combination of modulation caused by each of said at least two electromagnetic modulators, wherein said different predetermined types of modulation and said combinations are such that modulation due to each of said electrical signals can be identified in said modulated signal.

9. A device according to claim 8, comprising a plurality of retro-reflectors (10) a number of said plurality of retro-reflectors (10) being greater than said predetermined number.

10. A device according to any preceding claim, wherein said electromagnetic signal is a laser beam.

11. A device according to any preceding claim, wherein said serial to parallel converter (20) comprises a sampler for sampling said signal an output of said sampler during different subsets of time comprising said at least two parallel signals.

12. A network node or supporting communication with user equipment of a wireless telecommunication network, said network node comprising:
an antenna for receiving and transmitting wireless telecommunication communication signals to a user equipment, said wireless telecommunication signals being within a first frequency band; and
receiver for receiving an electromagnetic signal and a device according to any preceding claim for modulating said electromagnetic signal in response to a signal received from said user equipment, said electromagnetic signal being in a second frequency band different to said first frequency band.

13. A method for wirelessly transmitting information by modulating a wirelessly transmitted electromagnetic signal comprising:
reflecting said electromagnetic signal back towards a source of said electromagnetic signal using a retro-reflector;
receiving a signal comprising said information;
converting said signal into at least two parallel electrical signals;
applying said at least two parallel electrical signals to different ones of at least two electromagnetic modulators;
modulating at least one property of said electromagnetic signal with said at least two electromagnetic modulators, each of said electromagnetic modulators being operable to generate a different predetermined type of modulation such that modulation due to each electromagnetic modulator can be identified in said modulated signal.

14. A device for receiving and demodulating a signal, comprising:
a transmitter operable to transmit an electromagnetic signal wirelessly towards a signalling device;
a receiver operable to receive an electromagnetic signal, said electromagnetic signal comprising said electromagnetic signal transmitted by said transmitter and modulated by and reflected from said signalling device;
a demodulator operable to demodulate said received electromagnetic signal, said demodulator being operable to access modulation data for said electromagnetic signal indicating a plurality of phase shift patterns applied by a plurality of modulators on said signalling device and a sequence in which said signal was split and fed to said plurality of modulators, said demodulator identifying portions of said electromagnetic signal modulated by each of said plurality of modulators and demodulating and combining said signals in said sequence to form a demodulated signal.

15. A network controller node for supporting communication with user equipment of a wireless telecommunication network, said network controller node comprising:
a device according to claim 14 operable to transmit electromagnetic signals wirelessly towards a network node of said wireless telecommunication network, at least one of said electromagnetic signals comprising downlink data for user equipment communicating with said network node; wherein
said demodulator is operable to demodulate said received electromagnetic signal to extract uplink data from user equipment communicating with said network node; and
said device is operable to transmit said electromagnetic signals in a second frequency band towards said network node, said user equipment communicating with said network nodes in a first frequency band, said second frequency band being a different frequency band to said first frequency band.

## Patentansprüche

1. Vorrichtung zum drahtlosen Übertragen von Information durch Modulation eines drahtlos übertragenen elektromagnetischen Signals, wobei besagte Vorrichtung umfasst:
mindestens einen Rückstrahler (10), der betreibbar ist zum Reflektieren besagten elektromagnetischen Signals zurück zu einer Quelle besagten elektromagnetischen Signals, und
einen Modulator (20, 10), der angeordnet ist in einem Pfad besagten elektromagnetischen Signals und betreibbar zum Modulieren besagten elektromagnetischen Signals; wobei
besagter Modulator mindestens zwei elektromagnetische Modulatoren (12, 14) umfasst, jeder betreibbar zum Modulieren einer Eigenschaft besagten elektromagnetischen Signals in Abhängigkeit eines Signals, das auf besagten elektromagnetischen Modulator angewendet wird, wobei jeder besagter elektromagnetischen Modulatoren betreibbar ist zum Erzeugen eines unterschiedlichen vorbestimmten Typs von Modulation, sodass die Modulation aufgrund eines jeden elektromagnetischen Modulators identifiziert werden kann in besagtem modulierten Signal; wobei
besagter Modulator einen Eingang umfasst zum Empfangen eines Signals, das besagte Information umfasst, einen Seriell-zu-Parallel-Signalwandler (20) zum Konvertieren besagten Signals in mindestens zwei parallele Signale, wobei besagte mindestens zwei parallele Signale angewendet werden auf unterschiedliche besagter mindestens zwei elektromagnetischen Modulatoren (12, 14).

2. Vorrichtung nach Anspruch 1, wobei besagte elektromagnetische Modulatoren (12, 14) lichtmodulierendes Material umfassen, das angebracht ist an mindestens einem Teil einer Oberfläche besagten mindestens einen Rückstrahlers.

3. Vorrichtung nach Anspruch 2, wobei besagtes lichtmodulierendes Material Flüssigkristalle umfasst und besagte Eigenschaft eine optische Pfadlänge umfasst, sodass eine Phase besagten elektromagnetischen Signals moduliert wird durch besagtes angewendetes elektrisches Signal.

4. Vorrichtung nach Anspruch 3, wobei eine Orientierung besagter Flüssigkristalle unterschiedlich ist in mindestens zwei elektromagnetischen Modulatoren, sodass jeder elektromagnetische Modulator ein unterschiedliches Phasenverschiebungsmuster induziert.

5. Vorrichtung nach einem beliebigen der vorhergehenden Ansprüche, wobei mindestens einer besagter Rückstrahler (10) mindestens zwei elektromagnetische Modulatoren (12, 14) umfasst.

6. Vorrichtung nach Anspruch 5, wobei mindestens zwei besagter mindestens zwei elektromagnetischen Modulatoren angetrieben werden durch dasselbe elektrische Signal.

7. Vorrichtung nach Anspruch 5 oder 6, wobei mindestens zwei besagter mindestens zwei elektromagnetischen Modulatoren (12, 14) angetrieben werden durch ein unterschiedliches elektrisches Signal.

8. Vorrichtung nach einem beliebigen der vorhergehenden Ansprüche, umfassend:
eine vorbestimmte Anzahl elektromagnetischer Modulatoren, jeder betreibbar zum Erzeugen eines unterschiedlichen vorbestimmten Typs von Modulation, und weitere elektromagnetische Modulatoren, wobei jeder besagter weiteren elektromagnetischen Modulatoren betreibbar ist zum Erzeugen eines selben vorbestimmten Typs von Modulation als einer besagter vorbestimmten Anzahl elektromagnetischer Modulatoren, wobei
mindestens zwei besagter elektromagnetischen Modulatoren so angebracht sind, dass besagtes elektromagnetisches Signal durch beide besagter mindestens zwei elektromagnetischen Modulatoren passiert, und es wird ein selbes elektrisches Signal angewendet auf besagte mindestens zwei elektromagnetische Modulatoren, wobei die Modulation besagten elektromagnetischen Signals, das moduliert wurde von besagten mindestens zwei elektromagnetischen Modulatoren, eine Kombination ist aus Modulation durch jeden besagter mindestens zwei elektromagnetischen Modulatoren, wobei besagte unterschiedlichen vorbestimmten Typen von Modulation und besagte Kombinationen so sind, dass die Modulation aufgrund jedes besagter elektrischen Signale identifiziert werden kann in besagtem modulierten Signal.

9. Vorrichtung nach Anspruch 8, umfassend eine Vielzahl von Rückstrahlern (10) einer Anzahl besagter Vielzahl von Rückstrahlern (10), die größer ist als besagte vorbestimmte Anzahl.

10. Vorrichtung nach einem beliebigen der vorhergehenden Ansprüche, wobei besagtes elektromagnetisches Signal ein Laserstrahl ist.

11. Vorrichtung nach einem beliebigen der vorhergehenden Ansprüche, wobei besagter Seriell-zu-Parallel-Wandler (20) umfasst einen Sampler für das Sampling besagten Signals eines Ausgangs besagten Samplers während verschiedenen Zeituntersätzen, die besagte mindestens zwei parallele Signale umfassen.

12. Netzwerkknoten zum Unterstützen einer Kommunikation mit einem Teilnehmergerät eines drahtlosen Telekommunikationsnetzwerks, wobei besagter Netzwerkknoten umfasst:
eine Antenne zum Empfangen und Übertragen drahtloser Telekommunikationssignale auf ein Teilnehmergerät, wobei besagte drahtlose Telekommunikationssignale innerhalb eines ersten Frequenzbandes liegen; und
einen Empfänger zum Empfangen eines elektromagnetischen Signals und eine Vorrichtung nach einem beliebigen der vorhergehenden Ansprüche, zum Modulieren besagten elektromagnetischen Signals als Antwort auf ein Signal, das von besagtem Teilnehmergerät empfangen worden ist, wobei besagtes elektrisches Signal sich in einem zweiten Frequenzband befindet, das sich von dem ersten Frequenzband unterscheidet.

13. Verfahren zum drahtlosen Übertragen von Information durch Modulation eines drahtlos übertragenen elektromagnetischen Signals, umfassend:
Reflektieren besagten elektromagnetischen Signals zurück zu einer Quelle besagten elektromagnetischen Signals unter Verwenden eines Rückstrahlers;
Empfangen eines Signals, das besagte Information umfasst;
Konvertieren besagten Signals in mindestens zwei parallele elektrische Signale;
Anwenden besagter mindestens zwei parallelen elektrischen Signale auf verschiedene besagter mindestens zwei elektromagnetischen Modulatoren;
Modulieren mindestens einer Eigenschaft besagten elektromagnetischen Signals mit besagten mindestens zwei elektromagnetischen Modulatoren, wobei jeder besagter elektromagnetischen Modulatoren betreibbar ist zum Erzeugen eines unterschiedlichen vorbestimmten Typs von Modulation, sodass die Modulation aufgrund eines jeden elektromagnetischen Modulators identifiziert werden kann in besagtem modulierten Signal.

14. Vorrichtung zum Empfangen und Demodulieren eines Signals, umfassend:
einen Sender, der betreibbar ist zum Übertragen eines elektromagnetischen Signals in drahtloser Weise auf eine Signalisierungsvorrichtung;
einen Empfänger, der betreibbar ist zum Empfangen eines elektromagnetischen Signals, wobei besagtes elektromagnetisches Signal besagtes elektromagnetische Signal umfasst, das übertragen wurde durch besagten Sender und moduliert und reflektiert wurde von besagter Signalisierungsvorrichtung;
einen Demodulator, der betreibbar ist zum Demodulieren besagten empfangenen elektromagnetischen Signals, wobei besagter Demodulator betreibbar ist zum Zugreifen auf Modulationsdaten für besagtes elektromagnetisches Signal unter Anzeigen einer Vielzahl von Phasenverschiebungsmustern, die angewendet werden durch eine Vielzahl von Modulatoren auf besagte Signalisierungsvorrichtung, und einer Sequenz, in welcher besagtes Signal aufgeteilt und in besagte Vielzahl von Modulatoren eingespeist wurde, wobei jeder Demodulator Teile besagten elektromagnetischen Signals identifiziert, das moduliert wurde von jedem der Vielzahl von Modulatoren, und Demodulieren und Kombinieren besagter Signale in besagter Sequenz zum Bilden eines demodulierten Signals.

15. Netzwerkcontrollerknoten zum Unterstützen einer Kommunikation mit einem Teilnehmergerät eines drahtlosen Telekommunikationsnetzwerks, wobei besagter Netzwerkcontrollerknoten umfasst:
eine Vorrichtung nach Anspruch 14, die betreibbar ist zum Übertragen elektromagnetischer Signale auf drahtlose Weise auf einen Netzwerkknoten besagten drahtlosen Telekommunikationsnetzwerks, wobei mindestens eines besagter elektromagnetischen Signale Downlink-Daten für ein Teilnehmergerät umfasst, das mit besagtem Netzwerkknoten kommuniziert; wobei
besagter Demodulator betreibbar ist zum Demodulieren besagten empfangenen elektromagnetischen Signals zum Extrahieren von Uplink-Daten von einem Teilnehmergerät, das mit besagtem Netzwerknoten kommunizieren; und wobei
besagte Vorrichtung betreibbar ist zum Übertragen besagter elektromagnetischer Signale in einem zweiten Frequenzband auf besagten Netzwerkknoten, wobei besagtes Teilnehmergerät mit besagten Netzwerkknoten in einem ersten Frequenzband kommuniziert, wobei besagtes zweites Frequenzband ein Frequenzband ist, das sich von besagtem ersten Frequenzband unterscheidet.

## Revendications

1. Dispositif de transmission sans fil d'informations en modulant un signal électromagnétique transmis sans fil, ledit dispositif comprenant :
au moins un rétroréflecteur (10) permettant de réfléchir en retour ledit signal électromagnétique vers une source dudit signal électromagnétique ; et
un modulateur (20, 10) disposé dans un chemin dudit signal électromagnétique et permettant de moduler ledit signal électromagnétique ;
ledit modulateur comprenant au moins deux modulateurs électromagnétiques (12, 14) permettant chacun de moduler une propriété dudit signal électromagnétique en fonction d'un signal appliqué audit modulateur électromagnétique, chacun desdits modulateurs électromagnétiques permettant de générer un type de modulation prédéterminé différent de sorte que la modulation due à chaque modulateur électromagnétique puisse être identifiée dans ledit signal modulé ; dans lequel
ledit modulateur comprend une entrée destinée à recevoir un signal comprenant lesdites informations, un convertisseur de signal série/parallèle (20) destiné à convertir ledit signal en au moins deux signaux parallèles, lesdits au moins deux signaux parallèles étant appliqués à des modulateurs différents parmi lesdits au moins deux modulateurs électromagnétiques (12, 14).

2. Dispositif selon la revendication 1, dans lequel lesdits modulateurs électromagnétiques (12, 14) comprennent un matériau modulant la lumière monté sur au moins une partie d'une surface dudit au moins un rétroréflecteur.

3. Dispositif selon la revendication 2, dans lequel ledit matériau modulant la lumière comprend des cristaux liquides et ladite propriété comprend une longueur de chemin optique de sorte qu'une phase dudit signal électromagnétique soit modulée par ledit signal électrique appliqué.

4. Dispositif selon la revendication 3, dans lequel une orientation desdits cristaux liquides est différente dans lesdits au moins deux modulateurs électromagnétiques de sorte que chaque modulateur électromagnétique induise un motif de déphasage distinct.

5. Dispositif selon l'une quelconque des revendications précédentes, dans lequel au moins un desdits rétroréflecteurs (10) comprend au moins deux modulateurs électromagnétiques (12, 14).

6. Dispositif selon la revendication 5, dans lequel au moins deux desdits au moins deux modulateurs électromagnétiques sont activés par un même signal électrique.

7. Dispositif selon la revendication 5 ou 6, dans lequel au moins deux desdits au moins deux modulateurs électromagnétiques (12, 14) sont activés par un signal électrique différent.

8. Dispositif selon l'une quelconque des revendications précédentes, comprenant :
un nombre prédéterminé de modulateurs électromagnétiques permettant chacun de générer un type de modulation prédéterminé différent, et d'autres modulateurs électromagnétiques, lesdits autres modulateurs électromagnétiques permettant chacun de générer un même type de modulation prédéterminé que celui dudit nombre prédéterminé de modulateurs électromagnétiques, dans lequel
au moins deux desdits modulateurs électromagnétiques sont montés de sorte que ledit signal électromagnétique traverse lesdits au moins deux modulateurs électromagnétiques, et un même signal électrique est appliqué auxdits au moins deux modulateurs électromagnétiques, la modulation dudit signal électromagnétique modulé par lesdits au moins deux modulateurs électromagnétiques étant une combinaison d'une modulation due à chacun desdits au moins deux modulateurs électromagnétiques, lesdits types de modulations prédéterminés différents et lesdites combinaisons étant telles que la modulation due à chacun desdits signaux électriques puisse être identifiée dans ledit signal modulé.

9. Dispositif selon la revendication 8, comprenant une pluralité de rétroréflecteurs (10), un nombre de ladite pluralité de rétroréflecteurs (10) étant supérieur audit nombre prédéterminé.

10. Dispositif selon l'une quelconque des revendications précédentes, dans lequel ledit signal électromagnétique est un faisceau laser.

11. Dispositif selon l'une quelconque des revendications précédentes, dans lequel ledit convertisseur série/parallèle (20) comprend un échantillonneur destiné à échantillonner ledit signal, une sortie dudit échantillonneur durant différents sous-ensembles de temps comprenant lesdits au moins deux signaux parallèles.

12. Noeud de réseau destiné à prendre en charge la communication avec un équipement utilisateur d'un réseau de télécommunication sans fil, ledit noeud de réseau comprenant :
une antenne destinée à recevoir/transmettre des signaux de télécommunication sans fil depuis/à un équipement utilisateur, lesdits signaux de télécommunication sans fil étant inclus dans une première bande de fréquences ; et
un récepteur destiné à recevoir un signal électromagnétique et un dispositif selon l'une quelconque des revendications précédentes destiné à moduler ledit signal électromagnétique en réponse à un signal provenant dudit équipement utilisateur, ledit signal électromagnétique étant dans une seconde bande de fréquences différente de ladite première bande de fréquences.

13. Procédé de transmission sans fil d'informations en modulant un signal électromagnétique transmis sans fil, comprenant les étapes suivantes :
réfléchir en retour ledit signal électromagnétique vers une source dudit signal électromagnétique au moyen d'un rétroréflecteur ;
recevoir un signal comprenant lesdites informations ;
convertir ledit signal en au moins deux signaux électriques parallèles ;
appliquer lesdits au moins deux signaux électriques parallèles à des modulateurs électromagnétiques différents parmi au moins deux modulateurs électromagnétiques ;
moduler au moins une propriété dudit signal électromagnétique avec lesdits au moins deux modulateurs électromagnétiques, chacun desdits modulateurs électromagnétiques permettant de générer un type de modulation prédéterminé différent de sorte que la modulation due à chaque modulateur électromagnétique puisse être identifiée dans ledit signal modulé.

14. Dispositif pour recevoir et démoduler un signal, comprenant :
un émetteur permettant de transmettre sans fil un signal électromagnétique à un dispositif de signalisation ;
un récepteur permettant de recevoir un signal électromagnétique, ledit signal électromagnétique comprenant ledit signal électromagnétique transmis par ledit émetteur et modulé par ledit dispositif de signalisation et réfléchi par ce dernier ;
un démodulateur permettant de démoduler ledit signal électromagnétique reçu, ledit démodulateur permettant d'accéder à des données de modulation pour ledit signal électromagnétique indiquant une pluralité de motifs de déphasage appliqués par une pluralité de modulateurs sur ledit dispositif de signalisation et une séquence dans laquelle ledit signal a été divisé et délivré à ladite pluralité de modulateurs, ledit démodulateur identifiant des parties dudit signal électromagnétique modulé par chaque modulateur parmi ladite pluralité de modulateurs et démodulant et combinant lesdits signaux dans ladite séquence pour former un signal démodulé.

15. Noeud de contrôleur de réseau destiné à prendre en charge la communication avec un équipement utilisateur d'un réseau de télécommunication sans fil, ledit noeud de contrôleur de réseau comprenant :
un dispositif selon la revendication 14 permettant de transmettre sans fil des signaux électromagnétiques à un noeud de réseau dudit réseau de télécommunication sans fil, au moins un desdits signaux électromagnétiques comprenant des données de liaison descendante pour un équipement utilisateur communiquant avec ledit noeud de réseau ; dans lequel
ledit démodulateur permet de démoduler ledit signal électromagnétique reçu pour extraire des données de liaison montante à partir d'un équipement utilisateur communiquant avec ledit noeud de réseau ; et
ledit dispositif permet de transmettre lesdits signaux électromagnétiques dans une seconde bande de fréquences audit noeud de réseau, ledit équipement utilisateur communiquant avec lesdits noeuds de réseau dans une première bande de fréquences, ladite seconde bande de fréquences étant une bande de fréquences différente de ladite première bande de fréquences.
